# EUROPEAN PATENT APPLICATION

(11) **EP 3 238 982 A1**
(43) Date of publication of application: **01.11.2017**
(21) Application number: 16382186.1
(22) Date of filing: 27.04.2016
(51) Int. Cl.: B60N 2/36, E05B 77/38, E05B 85/24

(54) **LOCKING MECHANISM FOR A BACKREST OF A VEHICLE**

(71) Applicant: GRUPO ANTOLIN-INGENIERIA, S.A., 09007 Burgos (ES)
(72) Inventor: GONZÁLEZ PÉREZ, Jorge, 09007 Burgos (ES)
(74) Representative: Balder IP Law, S.L.

(57) **Abstract**

1.- The locking mechanism comprises a rotary latch (1) engageable over a locking striker (2) fixed to the vehicle, a detent pawl (3) for locking the movement of the rotary latch (1) in a locking position and a leaf spring (4) comprising two edges (6, 6') attached to the mechanism in a first support point (7) and a second support point (7'). The leaf spring (4) is placed in the mechanism such that in the locking position the striker (2) is pushed by the leaf spring (4) in one point of a contact area defined between a first end (8) and a second end (8'). The leaf spring (4) comprises a central reinforced area (10) and two exterior non-reinforced areas (11, 11'). The reinforced area (10) has smaller elastic deformation than the non-reinforced areas (11, 11'). A first edge (12) of the reinforced area (10) is placed between the first support point (7) and the first end (8) of the contact area and a second edge (12') of the reinforced area (10) is placed between the second support point (7') and a second end (8') of the contact area.

## Description

### TECHNICAL FIELD

The invention is related to locking mechanisms for vehicle seats, especially for locking the backrest of a rear seat to a vehicle structure.

### STATE OF THE ART

Locking mechanisms for vehicle seats must be able to block the position of the backrest to the structure of the vehicle but the locking force exerted by the mechanism must be no too strong to allow the closing of the mechanism and strong enough to prevent noises, especially rattle noises.

Locking mechanisms for locking vehicle seats are known in the art which comprise:
a rotary latch for engaging over a striker fixed to the vehicle structure;
a detent pawl for locking the movement of the rotary latch establishing a locking position for the seat;
a noise preventing mechanism for exerting a force upon the striker in the locking position.

A problem in the art is that the position between the striker and the locking mechanism varies due to mounting tolerances both of the striker and of the locking mechanism. When the noise preventing mechanism is a leaf spring, the mounting tolerances provoke little variations in the contact point of the striker upon the leaf spring but that little variations imply a great difference in the elastic deformation of the spring and consequently in the force exerted by the leaf spring upon the striker. Thus is difficult to control the locking force exerted by the mechanism during the closing of the mechanism and the prevention of rattle noises.

Locking mechanisms are disclosed for example in DE-3825594-A1, EP-0978606-B1, US-2012/0161455-A1 and GB-2212208-A.

### DESCRIPTION OF THE INVENTION

The invention relates to a locking mechanism for a backrest of a vehicle seat (mountable on the backrest of the seat) comprising:
a rotary latch engageable over a locking striker fixed to the vehicle;
a detent pawl for locking the movement of the rotary latch in engagement over the locking striker in a locking position (locking position means that the backrest is placed substantially vertical and the locking mechanism is engaged over the striker such that the backrest cannot be folded onwards) and
a leaf spring comprising two mounting edges attached to the mechanism in a first support point and a second support point so that a working area (working area is an area where the spring can bend elastically through contact with the striker) is defined between the mounting edges. The leaf spring is placed or mounted in the mechanism such that in the locking position the striker is pushed by the leaf spring in one point of a contact area within the working area. The contact area is an area defined by all the possible positions of the contact point of the striker upon the spring and is delimited by a first end and second end.

The striker and the locking mechanism can be mounted on its respective positions (on the vehicle structure and backseat) with a maximum tolerance which defines the contact area for the leaf spring.

According to the invention the leaf spring comprises a central reinforced area (delimited by a first edge and a second edge) and two exterior non-reinforced areas. The reinforced area has smaller elastic deformation than the non-reinforced areas. Preferably the deformation of the reinforced area is negligible with respect to the deformation on the non-reinforced areas, i.e. when the striker pushes against the reinforced area the elastic deformation of the spring (and the force exerted by the spring upon the striker) is only the deformation of the non-reinforced areas.

According to the invention the first edge of the reinforced area is placed between the first support point and the first end of the contact area and the second edge of the reinforced area is placed between the second support point and the second end of the contact area. The contact area is within the reinforced area such that the leaf spring always pushes against the striker in a point within the reinforced area regardless the relative position of the striker and the locking mechanism. Thus the deformation of the leaf spring is always the same (the deformation of the non-reinforced areas) and the force exerted by the spring can be controlled.

In some embodiments of the invention, the reinforced area is longer than 15 mm and preferably longer than 20mm.

In some embodiments of the invention the reinforced area comprises a contact surface for the striker forming an angle between 80-100 degrees with respect to the relative movement direction between the striker and the locking mechanism during the locking operation. The force exerted by the leaf spring upon the striker is constant regardless the relative orientation between the striker and the locking mechanism. Preferably the contact surface is orthogonal to the relative movement direction.

In some embodiments of the invention the leaf spring comprises an additional part placed in the reinforced area. In some embodiments the additional part is a plastic part over-molded over the leaf spring in the reinforced area.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 is a top view of the mechanism in an unlocked position. The upper cap has been removed for clarity.
Figure 2 is a top view of the mechanism in a locked position. The upper cap has been removed for clarity.
Figure 3 is a top view of the mechanism. The detent pawl and rotary latch and the upper cap have been removed for clarity.
Figure 4 is a perspective of the mechanism. The detent pawl, rotary latch and the upper cap have been removed for clarity.

### DESCRIPTION OF A WAY OF CARRYING OUT THE INVENTION

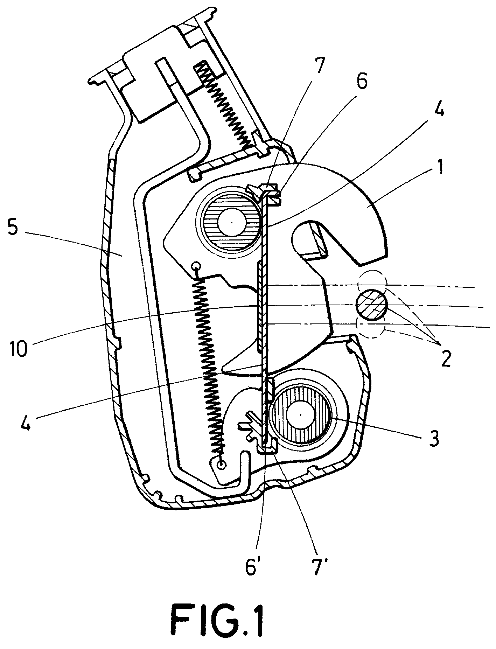

Figure 1 illustrates a locking mechanism in an unlocked position, comprising a rotary latch 1, a detent pawl 3 and a leaf spring 4. A locking striker 2 attachable to the vehicle structure is also represented although the vehicle structure is not illustrated.

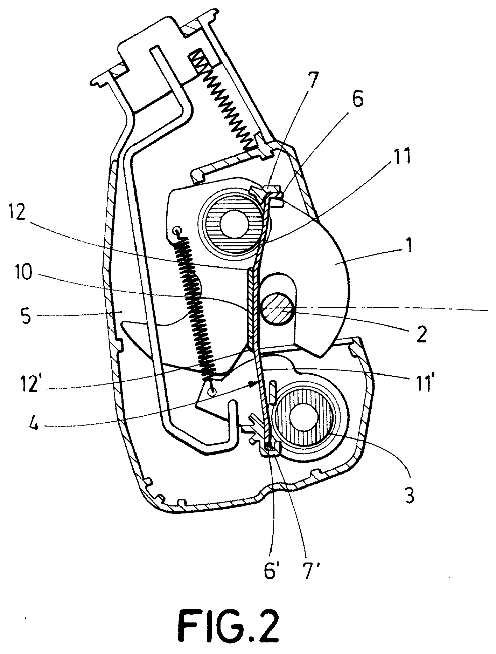

Figure 2 illustrates a locking mechanism in a locking position, comprising a rotary latch 1 engaged over a locking striker 2, a detent pawl 3 locking the rotary latch 1 and a leaf spring 4 pushing upon the striker (2).

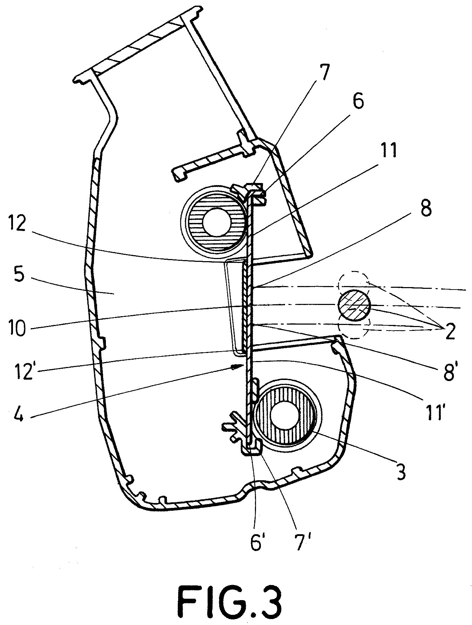

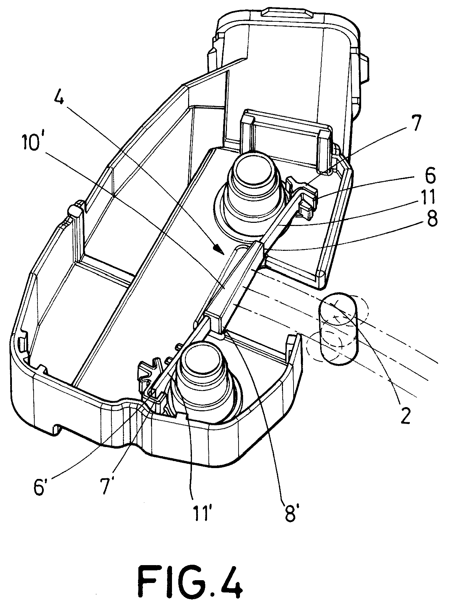

Figures 3 and 4 illustrate a locking mechanism in which the detent pawl 1 and rotary latch 3 have been removed for clarity. The upper cap has also been removed. The locking mechanism comprises a leaf spring 4 mounted on the support base 5 of the mechanism through its two mounting edges 6, 6'. The first mounting edge 6 is attached to a first support point 7 of the support base 5 and the second mounting edge 6' is attached to a second support point 7' of the support base 5. A working area for the leaf spring 4 is defined between the edges 6, 6'. That means that the leaf spring can deform elastically between the supporting points 7, 7' when a force is applied.

As can be seen in figure 3 the leaf spring 4 is placed in the support base 5 such that, in the locking position, the striker 2 is pushed by the leaf spring 4 in one point of a contact area within the working area. Figure 3 illustrates three possible positions of the striker 2 and the trajectories (in doted lines) that show the three different contacts points on the leaf spring 4. The different contacts points define a contact area on the leaf spring with a first end 8 and a second 8' corresponding to the extreme positions of the contact area.

As can be seen in figures 3 and 4 the leaf spring 4 comprises a central reinforced area 10 and two exterior non-reinforced areas 11, 11'. The reinforced area 10 has smaller elastic deformation than the non-reinforced areas 11, 11' such that the contact against the striker 2 in any point of the contact area produces the same elastic deformation of the non-reinforced areas 11, 11' and the deformation of the reinforced area 10 is practically negligible with respect to the non-reinforced areas 11, 11'. The force exerted by the leaf spring 4 in the three positions represented of the striker 2 is the same.

The reinforced area 10 comprises two edges 12, 12'. As illustrated in figures 2 and 3 the first edge 12 of the reinforced area 10 is placed between the first support point 7 and the first end 8 of the contact area and the second edge 12' of the reinforced area 10 is placed between the second support point 7' and a second end 8' of the contact area.

In an embodiment illustrated in figure 4 the reinforced area comprises a contact surface 13 for the striker 2 which is orthogonal to the relative movement direction between the striker 2 and the locking mechanism during the locking operation. In one embodiment the reinforced area 10 of the leaf spring 4 is an additional plastic part 10' over-molded over the leaf spring 4.

In this text, the term "comprises" and its derivations (such as "comprising", etc.) should not be understood in an excluding sense, that is, these terms should not be interpreted as excluding the possibility that what is described and defined may include further elements, steps, etc.

Unless otherwise indicated, any ranges referred to in this document include the indicated end points.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A locking mechanism for a backrest of a vehicle comprising:
A rotary latch (1) engageable over a locking striker (2) fixed to the vehicle;
a detent pawl (3) for locking the movement of the rotary latch (1) in engagement over the locking striker (2) in a locking position and
a leaf spring (4) comprising two edges (6, 6') attached to the mechanism in a first support point (7) and a second support point (7') so that a working area is defined between the support points (7,7'); the leaf spring (4) being placed in the mechanism such that, in the locking position, the striker (2) is pushed by the leaf spring (4) in one point of a contact area within the working area, the contact area being defined between a first end (8) and a second end (8') corresponding to limit positions of the contact point of the striker (2) along the leaf spring (4); **characterized in that** the leaf spring (4) comprises a central reinforced area (10) and two exterior non-reinforced areas (11, 11'), the reinforced area (10) having smaller elastic deformation than the non-reinforced areas (11, 11') and wherein a first edge (12) of the reinforced area (10) is placed between the first support point (7) and the first end (8) of the contact area and a second edge (12') of the reinforced area (10) is placed between the second support point (7') and a second end (8') of the contact area.

2. Locking mechanism as in claim 1 wherein the reinforced area (10) is longer than 20 mm.

3. Locking mechanism as in claims 1 or 2, wherein the reinforced area (10) comprises a contact surface for the striker (2) forming an angle between 80-100 degrees with respect to the relative movement direction between the striker (2) and the locking mechanism during the locking operation.

4. Locking mechanism as in any of previous claims, wherein the reinforced area (10) comprises a contact surface (1) for the striker (2) which is orthogonal to the relative movement direction between the striker (2) and the locking mechanism during the locking operation.

5. Locking mechanism as in any of previous claims wherein the leaf spring (4) comprises an additional part (10) placed in the reinforced area (10).

6. Locking mechanism as in claim 5 wherein the additional part (10') is a plastic part over-molded over the leaf spring (4) in the reinforced area (10).

7. Seat of a vehicle with a locking mechanism as in previous claims.
